Europäisches Patentamt

European Patent Office

Office européen des brevets

(11) Publication number: **0 084 185**

A1

(12) # EUROPEAN PATENT APPLICATION

(21) Application number: 82200050.1

(22) Date of filing: 15.01.82

(51) Int. Cl.³: **G 01 F 13/00**
**G 01 F 3/00**

(43) Date of publication of application:
27.07.83 Bulletin 83/30

(84) Designated Contracting States:
AT BE CH DE FR GB IT LI LU NL SE

(71) Applicant: Gist - Brocades N.V.
Wateringseweg 1 P.O. Box 1
NL-2600 MA Delft(NL)

(72) Inventor: Stolk, Izak Johannes
Oostsingel 195
NL-2612 HL Delft(NL)

(72) Inventor: Brouwer, Willem
Wassenaarsestraat 4
NL-3216 BD Abbenbroek(NL)

(72) Inventor: Visser, Hendrikus Wilhelmus
Mozartlaan 73
NL-2742 BP Waddinxveen(NL)

(74) Representative: Schmieman, Johannes Hendrik et al,
Gist-Brocades N.V. Patents & Trademarks Department
Wateringseweg 1 P.O. Box 1
NL-2600 MA Delft(NL)

(54) Processes for measuring quantities of gases and for delivering predetermined amounts of liquids and apparatuses to carry out these processes.

(57) A process for measuring quantities of gases and for delivering predetermined amounts of liquids, using an arrangement of interconnected liquid containing vessels (2, 3, 5) and control means (6, 7), in which a gas is introduced into one (2) of the vessels (2, 3, 5), which makes the liquid rise in another vessel (the measuring pipette 5) to a predetermined level (6), on which an amount of liquid flows from the system until a predetermined lower level (7) is reached, after which the liquid rises again, etc., and if desired the number of times that the measuring pipette (5) is filled and emptied is counted by a counter (21). An apparatus for carrying out the process is also described.

./...

Processes for measuring quantities of gases and for delivering predetermined amounts of liquids and apparatuses to carry out these processes.

The invention relates to processes for measuring quantities of gases and for delivering predetermined amounts of liquids and to apparatuses to carry out these processes.

More particularly, the invention provides a process which is very well suited to measure the quantity of gas formed in a chemical process, for instance the quantity of carbon dioxide produced by a fermenting dough.

In principle, two methods can be applied for measuring a quantity of gas: determination of a volume change at constant pressure or determination of a pressure change at constant volume. The method of the invention is based on the first mentioned principle. A simple application of this principle comprises displacement of liquid in a burette which can be adjusted in a vertical direction to make the pressures at the beginning and the end of the measurement equal to each other. Apparatuses based on this principle are described by C.H. Bailey and A.H. Johnson, Cereal Chem. 1, 293 (1924); S. Eisenberg, Ibid., 430 (1940); S. Burrows and J.S. Harrison, J.Inst.Brewing, 65, 39 (1959). Examples of recording apparatuses, using for instance a collecting vessel for the displaced liquid provided with a float to which a stylus is attached, are described by M.C. Markley and C.H. Bailey, Cereal Chem. 9, 591 (1932); G.L. Rubenthaler et al., Cereal Chem. 57 (3), 212 (1980) and in Kent-Jones & Adams, Modern Cereal Chemistry (Food Trade Press Ltd., London, 6th Ed. (1967), page 359 (SJA apparatus).

Examples of recording instruments operating with varying gas pressure, are the Chopin Zymotachegraph and the Brabender Fermentograph (see Modern Cereal Chemistry, pages 355 and 359).

Existing methods and instruments often show one or more of the following disadvantages:

- they are based on pressure measurement and thus require complicated calculations or calibration procedures,

- they do not permit automatic recording,

- they need specially trained personnel for
handling,

- they are difficult to automatize,

- they have a low precision.

In these respects the method and apparatus of the invention compare favourably with known methods and apparatuses.

The process of delivering predetermined amounts of liquids according to the invention comprises introducing a gas into the lower of two vessels which are closed from the atmosphere and which comprise the liquid to be delivered, which two vessels are interconnected by a tube ending below the liquid level in the lower vessel, which causes the liquid to rise in a small, third vessel ("measuring pipette") interconnected to the lower vessel by a tube which is provided with a closing valve, which measuring pipette has an opening above the liquid level and a liquid outlet with a closing valve and is provided with means to control the liquid level in such a way that each time the liquid level reaches a predetermined maximum the tube between said lower vessel and the measuring pipette is closed and the outlet valve is opened and each time the liquid level comes below a predetermined minimum the tube between said lower vessel and the measuring pipette is opened and the outlet is closed.

It will be clear that the distance between maximum and minimum level will define a certain quantity of liquid and that by introducing a constant stream of gas this quantity will be delivered at regular intervals. The control of the liquid level may take place in various ways. Non-mechanical, for instance electric or optical, methods are preferred. A suitable method involves the use of a measuring pipette provided with electrodes which are connected to a control unit acting on the valves, in such a way that each time the liquid reaches the highest electrode the tube between said lower vessel and the measuring pipette is closed and the outlet is opened and each time the liquid level comes below a second, lower electrode the tube between the lower vessel and the measuring pipette is opened and the outlet is closed. This is a suitable method when an electricity-conducting liquid is to be delivered, for instance an aqueous electrolyte solution.

The process of the invention for measuring quantities of gases comprises introducing a gas into the lower of two vessels which are closed from the atmosphere and which comprise a liquid, which two vessels are interconnected by a tube ending below the liquid level in the lower vessel, which causes the liquid to rise in a small, third vessel ("measuring pipette") interconnected to the lower vessel by a tube which is provided with a closing valve, which measuring pipette has an opening to the atmosphere and an outlet with a closing valve and is provided with means to control the liquid level and a counter in such a way that each time the liquid level reaches a predetermined maximum the tube between said lower vessel and the measuring pipette is closed and the outlet is opened and each time the liquid level comes below a predetermined minimum the tube between said lower vessel and the measuring pipette is opened and the outlet is closed and that the counter counts the number of times that the measuring pipette is filled and emptied. The indication of the counter and the volume delivered by the measuring pipette determine the quantity of the gas. For instance, when the pipette delivers one $cm^3$ of liquid and the indication of the counter is n, the gas quantity is n $cm^3$. It will be understood that the gas to be measured should be virtually insoluble in the liquid. When measuring carbon dioxide, this can be achieved by acidifying the liquid. It has been found that good results can also be obtained when carbon dioxide is introduced for some time before the actual measurement, so that the liquid will be more or less saturated with the gas.

The invention also provides an apparatus to carry out the above described processes. The apparatus comprises two vessels (an "upper vessel" and a "lower vessel") which are interconnected by a tube extending in the lower vessel, which lower vessel has an inlet and is connected by a tube with a closing valve to a small, third vessel ("measuring pipette"), which measuring pipette has an opening at the upper side and a liquid outlet with a closing valve at the bottom. In this specification and the accompanying claims the terms "upper", "lower" and"bottom" refer to the position of the vessels when the apparatus is in operation and the term "valve" refers to any means to interrupt a flow of gas or liquid. In a preferred embodiment of the invention the measuring pipette comprises a number of electrodes.

It is further preferred that the position of at least one of the electrodes can be adjusted.

In a further preferred embodiment the closing valve between the lower vessel and the measuring pipette and the outlet of the measuring pipette are combined in a three-way valve.

The materials used for the apparatus will depend on the gas and the liquid to be used or measured. Glass vessels and tubing made of a corrosion-resistant material are suited for many purposes. Red copper tubing is preferred in many instances as it does not corrode quickly and is easy to work up. The connections between vessels and tubing are suitably made of a gas-tight flexible material such as butyl rubber. The measuring pipette is preferably made of a hard plastic material such as acryl glass (e.g. Perspex $^{®}$) which can be worked up easily and with great precision and in which electrodes can be readily fitted.

When the liquid used is water, materials like acryl glass further have the advantage that they are water-repellent, so that the liquid easily flows out.

The volume of the "upper vessel" should be sufficient for the total gas volume to be measured. The volume to be delivered by the measuring pipette will depend on the volume of gas to be measured and the accuracy required. For instance, volumes of 500, 50 and 1 ml for respectively the upper and lower vessel and the measuring pipette are suitable for measurement of gas evolution during a few hours with a flow speed in the order of milliliters per minute. The minimum volume of the measuring pipette will depend on the characteristics of the material and from the fact whether the measuring pipette is provided with electrodes. The valves are preferably magnetic valves, which can be actuated by generally known electric control means.

The apparatus or a number of them is (are)

- 5 -

**0084185**

preferably placed in a cupboard with thermostatically controlled air temperature. During measurement the opening at the upper side of the measuring pipette may be in connection with the atmosphere. This may imply that corrections to the measuring results have to be made, for instance when it is desired to reduce the results of a series of measurements to the same pressure. Alternatively the measuring pipette may be connected to a vessel in which the gas (air) pressure is automatically maintained at a constant value.

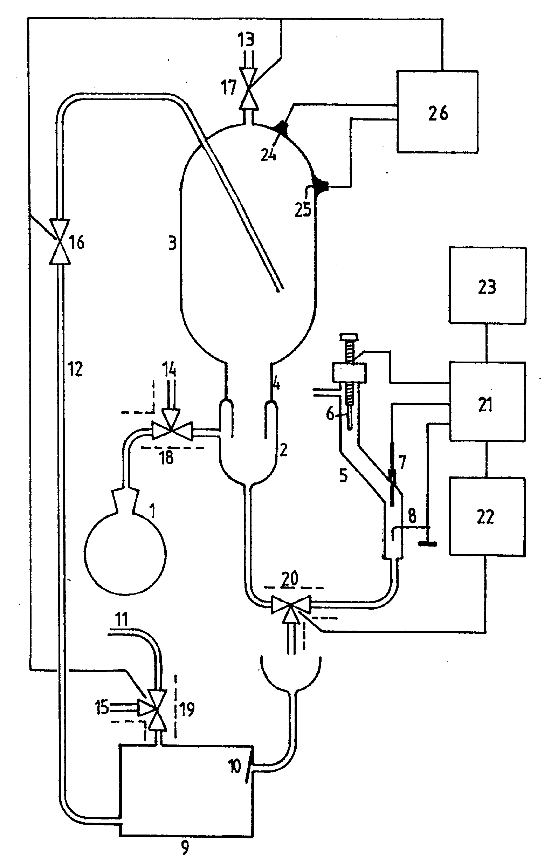

A preferred embodiment of the invention will be described with reference to the accompanying drawing which schematically shows the apparatus of the invention connected with a gas source, a liquid-collecting vessel, a counter and control and recording units.

The figures in the drawing have the following meanings:

1 is a flask,

2 and 3 are the "lower" and "upper" vessels interconnected by the tube 4 which extends into the "lower" vessel (2),

5 is the measuring pipette,

6 is an adjustable electrode,

7 and 8 are fixed electrodes,

9 is a collecting vessel,

10 is a non-return valve,

11 is an inlet tube for compressed air,

12 is a tube connecting collecting vessel (9) with vessel (3),

13, 14 and 15 are outlets to the atmosphere,

16 and 17 are magnetic valves,

18, 19 and 20 are three-way magnetic valves, the positions used being indicated by dashed lines,

21 is a counter,

22 is a control unit, comprising means to actuate valve 20 and means to convert the weak signal of the electrodes into a stronger signal for said actuating means,

23 is a recorder,

24 and 25 are electrodes,

26 is a control unit acting on valves 16, 17 and 19.

The drawing represents a suitable configuration for determining the amount of gas formed in flask (1) by a chemical reaction e.g. in fermenting dough.

Before the measurement starts, the valves (16) and (17) are closed, flask (1) is connected with the atmosphere through three-way valve (18), collecting vessel (9) is connected with the atmosphere through three-way valve (19) and the vessel (2) is connected with the measuring pipette (5) through the three-way valve (20). The gas produced in the flask (1) can be meaured as follows.

The position of valve (18) is altered to connect flask (1) with vessel (2) and the pressure of the gas in vessel (2) makes the liquid rise in the measuring pipette (5). When the liquid level reaches electrode (6), an electric pulse is given to the counter (21) and the control unit (22) which acts on valve (20), so that vessels (2) and (5) are disconnected and the measuring pipette (5) is brought in connection with the outlet of valve (20). When the liquid comes below electrode (7), the control unit makes the valve (20) return to its original position and the liquid begins to rise again in the measuring pipette (5) etc. The recorder (23) may registrate the number of times that the measuring pipette (5) is filled (i.e. the volume of gas produced) as a function of the time. By including a digital-analog converter between the counter (21) and the recorder (23) a curve of the gas volume may be produced. When the gas produced in a particular time interval is to be measured, it is convenient to connect valve (18) to a control unit with a time switch, so that the measurement can be stopped without the apparatus being watched.

By measuring a volume of gas and the time elapsed between beginning and end of the measurement, the flow speed can be obtained. For the same purpose a counter may be incorporated which indicates the number of pulses received per time unit.

From time to time a gas bubble will escape from vessel (2) into vessel (3). This is immediately compensated by an amount of liquid from vessel (3). The liquid in the collecting vessel 9 may be returned to vessel (3) by compressed air, entering through tube (11). Valves (16) and (17) should then be opened.

When the apparatus is to be used to deliver predetermined quantities of liquid, the collecting vessel should be omitted, so that, for instance, a row of flasks can be moved under the outlet of valve (20) so as to fill each flask with the predetermined quantity of liquid.

By using magnetic valves and appropriate control means (such as a control unit (26) connected with electrodes (24) and (25) and with valves (16), (17) and (19)), starting and stopping of the measurement and refilling of vessel (3) may be fully automatized. It is also possible to use manually operated stopcocks to carry out these steps by hand.

0084185

Claims.

1. A process for measuring quantities of gases and for delivering predetermined amounts of liquids in which process a liquid is displaced by a gas at substantially constant pressure, which comprises introducing a gas into the lower of two vessels which are closed from the atmosphere and which comprise a liquid, which two vessels are interconnected by a tube ending below the liquid level in the lower vessel, which causes the liquid to rise in a small, third vessel ("measuring pipette") interconnected to the lower vessel by a tube which is provided with a closing valve, which measuring pipette has an opening above the liquid level and a liquid outlet with a closing valve and is provided with means to control the liquid level and, when a quantity of gas is to be measured, a counter in such a way that each time the liquid level reaches a predetermined maximum the tube between said lower vessel and the measuring pipette is closed and the outlet valve is opened and each time the liquid level comes below a predetermined minimum the tube between said lower vessel and the measuring pipette is opened and the outlet is closed and that the counter, if present, counts the number of times that the measuring pipette is filled and emptied.

2. A process according to claim 1, characterized in that the liquid level in the measuring pipette is controlled by non-mechanical means.

3. A process according to claim 2, characterized in that a measuring pipette is used which is provided with electrodes which are connected to a control unit acting on the valves, in such a way that each time the liquid reaches the highest electrode the tube between said lower vessel and the measuring pipette is closed and the outlet is opened and each time the liquid level comes below a second, lower electrode the tube between the lower vessel and the measuring pipette is opened and the outlet is closed and that an electricity-conducting liquid is used.

4. An apparatus to carry out the process of claim 1, which comprises two vessels (an "upper vessel" and a "lower vessel") which are interconnected by a tube extending in the lower vessel, which lower vessel has an inlet and is connected by a tube with a closing valve to a small, third vessel ("measuring pipette"), which measuring pipette has an opening at the upper side and a liquid outlet with a closing valve at the bottom.

5. An apparatus according to claim 4 in which the measuring pipette comprises a number of electrodes.

6. An apparatus according to claim 5 in which the position of at least one of the electrodes can be adjusted.

7. An apparatus according to claim 4, 5 or 6 in which the closing valve between the lower vessel and the measuring pipette and the outlet of the measuring pipette are combined in a three-way valve.

8. An apparatus according to any of claims 4-7, in which the measuring pipette is made of a hard plastic material such as acryl glass.

9. An apparatus according to any of claims 4-8, in which the valves are electromagnetic valves.

10. An apparatus according to any of claims 4-9, or a plurality of them, placed in a cupboard with thermostatically controlled air temperature.

0084185

0084185

**European Patent Office**

**EUROPEAN SEARCH REPORT**

Application number

EP 82200050.1

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| A | GB - A - 1 388 501 (BIO-MEDICAL SCIENCES) <br> * Page 3, lines 92-101; fig. 2 * | 1-5,9 | G 01 F 13/00 <br> G 01 F 3/00 |
| | -- | | |
| A | GB - A - 1 146 752 (WIEGMANN) <br> * Page 4, line 102 - page 5, line 22; fig. 4,5,6 * | 1,2,4 | |
| | ---- | | |

**TECHNICAL FIELDS SEARCHED (Int.Cl. 3)**

G 01 F 13/00

G 01 F 3/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| X | The present search report has been drawn up for all claims | | |
|---|---|---|---|
| Place of search | Date of completion of the search | | Examiner |
| VIENNA | 14-10-1982 | | STÖGER |

EPO Form 1503.1  06.78